# EUROPEAN PATENT APPLICATION

(11) **EP 4 335 880 A1**
(43) Date of publication of application: **13.03.2024**
(21) Application number: 23192878.9
(22) Date of filing: 23.08.2023
(51) Int. Cl.: C08F 8/00, C08G 77/04, C08L 83/04, C09J 11/08, C09J 183/04

(54) **BIONIC WET SURFACE ADHESION PROMOTER AND PREPARATION THEREOF AND ROOM TEMPERATURE CURABLE SILICONE SEALANT COMPOSTION AND PREPARATION THEREOF**

(30) Priority: 30.08.2022 CN 202211046238
(71) Applicant: E Man Construction Co. Ltd., Hong Kong (HK)
(72) Inventor: GAO, Lei, Hong Kong (HK); ZHOU, Chao, Hong Kong (HK); BAO, Su Ping, Hong Kong (HK); SHAM, Man Lung, Hong Kong (HK)
(74) Representative: Klunker IP Patentanwälte PartG mbB

(57) **Abstract**

The disclosure belongs to the technical field of synthetic adhesives, and disclosures a bionic wet surface adhesion promoter and the preparation thereof, and a room temperature curable silicone sealant composition and the preparation thereof. A method for preparing a bionic wet surface adhesion promoter includes the following steps: Reaction: reacting polyvinylpyrrolidone with 2-chloro-3',4'-dihydroxyacetophenon; Purification: purifying the product obtained in the reaction step; Drying: drying the product obtained in the purification step; and Grinding: grinding the product obtained in the drying step into powder; wherein the mass ratio of polyvinylpyrrolidone to 2-chloro-3',4'-dihydroxyacetophenon is (0.8 ~ 1.2): 1, the purification step uses n-hexane for purification, the drying step adopts a vacuum drying process, and the grinding step adopts a ball milling process. The room temperature curable silicone sealant composition according to the disclosure includes the bionic wet surface adhesion promoter prepared by the above method, has good adhesion performance on both a dry surface and a wet surface, has good flexibility and durability, and may be used in the construction field, especially in humid environments not suitable for room temperature curable silicone structural adhesive products commonly used in the market at present.

## Description

### TECHNICAL FIELD

The disclosure belongs to the technical field of synthetic adhesives, and more particularly relates to a bionic wet surface adhesion promoter and the preparation thereof, and a room temperature curable silicone sealant composition and the preparation thereof.

### BACKGROUND

Adhesives used in modem technology are mainly synthetic adhesives, referred to as synthetic sealant. From the perspective of application, the synthetic sealant may be divided into structural sealant and non-structural sealant. The structural sealant is mainly used to bear loads, and thus it must have enough strength to bear loads, and at the same time, it must have enough elastic modulus to avoid large displacement caused by loads; and the non-structural sealant is generally used for process positioning, defect filling, conductive connection, equipment sealing, and the like. From the perspective of chemical composition, it may be divided into silicones, epoxy resins, polyurethanes, and the like. Traditional silicone sealant, including structural silicone sealant and non-structural silicone sealant, only has good adhesion on a clean and dry substrate, but it is easy to lose adhesion on a wet substrate surface. Therefore, it may be subject to the following restrictions in use: (1) it is not suitable for the places soaked in water for a long time; (2) frosted or wet surfaces cannot be bonded. Therefore, many efforts have been made to improve the adhesion of silicone sealant on the wet substrate surface.

U.S. Patent Publication No. US 2019194508 A1 discloses a one-component silicone sealant composition curable when exposed to moisture at room temperature, using a water-absorbent nano-filler as a wet surface adhesion promoter to improve the adhesion of the silicone sealant on a wet substrate surface, but the composition cannot be used as the silicone structural sealant for bearing loads.

U.S. Patent Publication No. US 2007066768 A1 discloses compositions of monomeric silanes containing oligosilanes, aminofunctional oligosiloxane, or silicone polymers, the compositions improve the adhesion of sealants or adhesives or coatings to many difficult substrates, especially dry and wet concrete, by acting as wet surface adhesion promoters for moisture-curable silicones, but such a solution is also not suitable for being used as the silicone structural sealant on the wet substrate surface.

Previously, our research group proposed additives to improve the bonding performance on wet substrates and applied them to silicone sealants, but this solution is also not suitable for being used as the silicone structural sealant on the wet substrate. As a result, it is necessary to develop silicone structural sealant suitable for both the dry surface and the wet surface.

### SUMMARY

The disclosure aims to overcome at least one defect (deficiency) in the prior art, provide a method for preparing a bionic wet surface adhesion promoter, and obtain a silicone structural sealant suitable for both a dry surface and a wet surface, so as to improve the adhesion of silicone structural sealant on a wet substrate.

In order to solve the above technical problems, the following technical solutions may be adopted.

In a first aspect, a method for preparing a bionic wet surface adhesion promoter includes the following steps:
Reaction: reacting polyvinylpyrrolidone with 2-chloro-3',4'-dihydroxyacetophenon;
Purification: purifying the product obtained in the reaction step;
Drying: drying the product obtained in the purification step; and
Grinding: grinding the product obtained in the drying step into powder;
wherein the mass ratio of polyvinylpyrrolidone to 2-chloro-3',4'-dihydroxyacetophenon is (0.8 ~ 1.2): 1, the purification step uses n-hexane for purification, the drying step adopts a vacuum drying process, and the grinding step adopts a ball milling process.

In a second aspect, a bionic wet surface adhesion promoter is prepared by the method described in the first aspect.

In a third aspect, a room temperature curable silicone sealant composition includes:
a) 0.2-5 parts by weight of the bionic wet surface adhesion promoter as described in the second aspect;
b) 60-120 parts by weight of polyorganosiloxane, having the viscosity of 3000 ~ 100000 mPa•s at room temperature;
c) 20-50 parts by weight of plasticizer, having the viscosity of 50 ~ 1000 mPa•s at room temperature;
d) 2-10 parts by weight of crosslinking agent, comprising more than three types, each containing more than two reactive groups capable of reacting with the polyorganosiloxane;
e) 2-7 parts by weight of catalyst, comprising tin catalyst and titanium catalyst;
f) 60-120 parts by weight of inorganic filler; and
g) 0-10 parts by weight of functional filler;
wherein the composition has tensile adhesion strength of 0.90 MPa or more on a dry substrate measured based on the standard ASTM C1135; and the composition has tensile adhesion strength of 0.70 MPa or more on a wet substrate measured based on the standard ISO 8339.

In a fourth aspect, a method for preparing the room temperature curable silicone sealant composition includes the following steps:
S1. mixing the polyorganosiloxane with the plasticizer;
S2. adding the inorganic filler, and fully mixing and dispersing under 90-140 °C and vacuum;
S3. adding the crosslinking agent and the functional filler under 40-80 °C and vacuum; and
S4. adding the catalyst under a nitrogen atmosphere.

Compared with the prior art, the disclosure may have the following beneficial effects:
The one-component room temperature curable silicone sealant composition according to the disclosure has good adhesion performance on both the dry surface and the wet surface, and has good flexibility and durability. In combination with other desired properties such as anti-mould property, the one-component room temperature curable silicone sealant composition may be used in the construction field, especially in humid environments not suitable for room temperature curable silicone structural adhesive products commonly used in the market at present.

### BRIEF DESCRIPTION OF THE DRAWINGS

Fig. 1 is a flow chart of a method for preparing a bionic wet surface adhesion promoter.
Fig. 2 is a flow chart of a method for preparing a silicone sealant composition.

### DETAILED DESCRIPTION

An embodiment provides a room temperature curable silicone sealant composition, which includes: 0.2-5 parts by weight of a bionic wet surface adhesion promoter, 60-120 parts by weight of polyorganosiloxane, 20-50 parts by weight of plasticizer, 2-10 parts by weight of crosslinking agent, 2-7 parts by weight of catalyst, 60-120 parts by weight of inorganic filler and 0-10 parts by weight of functional filler.

In the above silicone sealant composition, the bionic wet surface adhesion promoter is the product of the reaction of polyvinylpyrrolidone (PVP) and 2-chloro-3',4'-dihydroxyacetophenon, and the reaction formula is as follows:

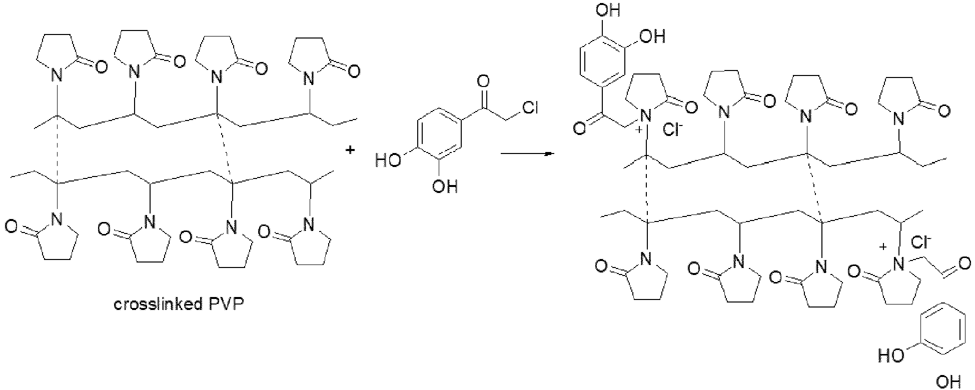

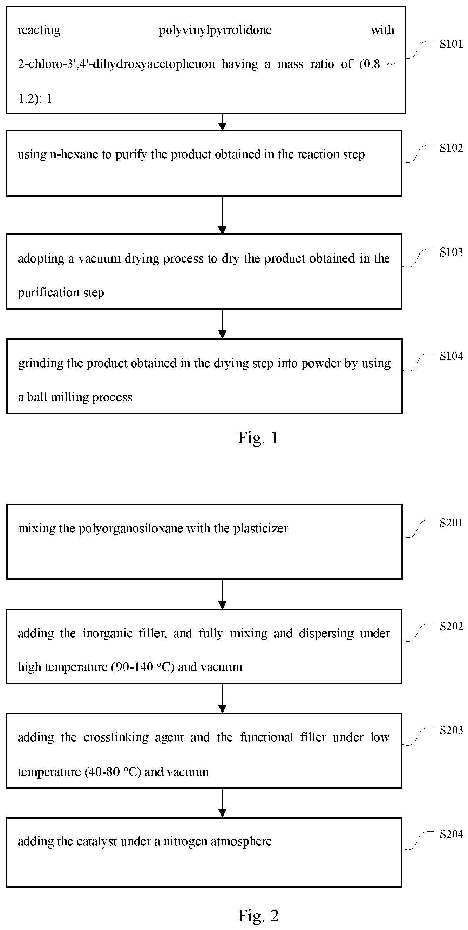

Referring to Fig. 1, which depicts a flow chart of a method for preparing a bionic wet surface adhesion promoter, the preparation method includes the following steps:
S101. Reaction: reacting polyvinylpyrrolidone with 2-chloro-3',4'-dihydroxyacetophenon having a mass ratio of (0.8 ~ 1.2): 1;
S102. Purification: using n-hexane to purify the product obtained in the reaction step;
S103. Drying: adopting a vacuum drying process to dry the product obtained in the purification step; and
S104. Grinding: grinding the product obtained in the drying step into powder by using a ball milling process.

Specifically, the method includes the following steps: adding polyvinylpyrrolidone and 2-chloro-3',4'-dihydroxyacetophenon with the mass ratio of (0.8 ~ 1.2): 1 into a Parr bench reactor with a capacity of 1 L, and then adding ethanol to obtain a dark brown mixture; changing the atmosphere from air to N₂, and carrying out the reaction at 70 °C at a stirring speed of 200 rpm, with an internal pressure of 0.7 atm; after 7 hours, obtaining a mixture of the reaction product and residual raw materials, and cooling the mixture to room temperature and then purifying it with n-hexane in a container; in the purification process, placing the container in an ultrasonic device for 1 hour to remove the residual raw materials; after purification, transferring the reaction product to a polytetrafluoroethylene (PTFE) plate and drying it together with the PTFE plate in a vacuum oven (-0.08 MPa) at 50 °C for 1-2 days to obtain a very fragile solid product; and transferring the fragile solid product to a tank of about 100 ml and ball-milling at 350 rpm for 12 hours to obtain a powder capable of passing through a 230 # mesh sieve. Preferably, the mass ratio of polyvinylpyrrolidone to 2-chloro-3',4'-dihydroxyacetophenon is (0.9 ~ 1.1): 1, and the most preferably is 1: 1.

In the above silicone sealant composition, the viscosity of polyorganosiloxane at room temperature (25 °C) is 3000 ~ 100000 mPa•s. Preferably, the polyorganosiloxane includes two or more polyorganosiloxanes having different viscosities. The polyorganosiloxane is an alkoxy-terminated polyorganosiloxane or a hydroxyl-terminated polyorganosiloxane. Preferably, the polyorganosiloxane is an alkoxy-terminated polyorganosiloxane with a molecular formula of H₃CO-[R₂SiO]ₙ-OCH₃, wherein R is selected from hydrogen, methyl, ethyl or phenyl, and n is an integer between 500 and 2000. Alternatively, the alkoxy-terminated polyorganosiloxane is obtained by modifying the hydroxyl-terminated polyorganosiloxane with a molecular formula HO-[R₂SiO]ₙ-OH.

In the above silicone sealant composition, the viscosity of the plasticizer at room temperature (25 °C) is 50 ~ 1000 mPa•s. Preferably, the plasticizer is a methyl-terminated polyorganosiloxane.

In the above silicone sealant composition, the crosslinking agent includes more than three types, each containing more than two reactive groups capable of reacting with the polyorganosiloxane. Preferably, two or more of the crosslinking agent are selected from methyltrimethoxysilane, methyltriethoxysilane, dimethoxydimethyl silane, vinyltrimethoxysilane, vinyltriethoxysilane, vinylmethyldimethoxysilane, tetramethyl orthosilicate, or tetraethyl orthosilicate. Preferably, one of the crosslinking agent is selected from 3-aminopropyltriethoxysilane, 3-aminopropyltrimethoxysilane, 3-Aminopropyl-methyldiethoxysilane, [3-(2-aminoethylamino)propyl]trimethoxysilane, 3-(2-aminoethylamino)propylmethyldimethoxysilane, or γ-glycidoxypropyltrimethoxysilane.

In the above silicone sealant composition, the catalyst includes tin catalyst and titanium catalyst. Preferably, the tin catalyst is selected from one or more of dibutyltin dilaurate, dibutyltin diacetate, dioctyltin dilaurate, dibutyl dioctyl tin, or dibutyltin oxide; and the titanium catalyst is selected from one or more of isopropyl titanate, tetrabutyl titanate, or titanium chelates.

In the above silicone sealant composition, preferably, the inorganic filler is selected from one or more of nano calcium carbonate, precipitated calcium carbonate, ground calcium carbonate, fumed silica, or precipitated silica.

In the above silicone sealant composition, the functional filler is selected from one or more of an anti-mould agent, a UV absorber, a light stabilizer, an antioxidant, and a pigment, and the ratio thereof is preferably 0.1 to 9 parts by weight. Preferably, the anti-mould agent is selected from one or more of azoles, triazoles, isothiazolones, and organozinc salts.

Referring to Fig. 2, which shows a flow chart of a preparing method for the above silicone sealant composition, the preparation method includes the following steps:
S201. mixing the polyorganosiloxane with the plasticizer;
S202. adding the inorganic filler, and fully mixing and dispersing under high temperature (90-140 °C) and vacuum;
S203. adding the crosslinking agent and the functional filler under low temperature (40-80 °C) and vacuum; and
S204. adding the catalyst under a nitrogen atmosphere.

The above method specifically includes the following steps: stirring and mixing polyorganosiloxane and plasticizer with various viscosities under negative pressure (-0.08 MPa), and heating to about 80 °C; adding the inorganic filler, continuing to fully stir and disperse under negative pressure (-0.08 MPa), heating to 130 °C and keeping warm for one hour, then cooling down to 65 °C, and filling with N₂; adding the crosslinking agent, the bionic wet surface adhesion promoter, the UV absorber and the light stabilizer, and stirring and dispersing for 15 minutes under negative pressure (-0.07 MPa); filling N₂, adding the catalyst, stirring at low speed for 10 minutes, and stirring and dispersing at low speed under negative pressure (-0.08 MPa) for 15 minutes; and after fully mixing uniformly, filling N₂, and extruding and packaging.

For a better understanding of the embodiments by those skilled in the art, the disclosure will be further explained below with reference to specific examples and comparative examples. The process methods used in the examples and comparative examples are conventional methods unless otherwise specified; and the materials used may be available commercially unless otherwise specified.

Wherein the polyorganosiloxane was purchased from Shenzhen Jipeng Silicon Fluorine Materials Co., Ltd. and Guangzhou Xinguan Chemical Technology Co., Ltd.; the plasticizer was purchased from Shenzhen Jipeng Silicon and Fluorine Materials Co., Ltd. and Hubei Xiangyang Jiurun Fluorine and Silicon Materials Co., Ltd.; the crosslinking agent was purchased from Hubei Bluesky New Materials Co., Ltd. (LT-550, LT-540, LT-560, LT-792, LT-602, LT-151, LT-171, and LT-8122), Nanjing Quanxi Chemical Co., Ltd. (MTMS, DMDMS, and ViTMS) and Guangzhou Yuanda New Materials Company (KH-550, KH-560, and ViTMS); tin catalyst was purchased from Hubei Bluesky New Materials Co., Ltd. (D-80); titanium catalyst was purchased from Changsha Luosi Chemical Co., Ltd. (Yuan Ti), Hubei Huanyu Chemical Co., Ltd. (HY-300) and Nanjing Nengde New Material Technology Co., Ltd. (TCA-DC); the inorganic filler was purchased from Guangxi Huana New Material Technology Co., Ltd. (CCS25i and 1250-M); the UV absorber and the light stabilizer were purchased from Shanghai Wanluji Plasticizing Technology Co., Ltd. and Dongguan Baoxu Chemical Technology Co., Ltd. (UV B75), and the pigment was purchased from Shenzhen Jitian Chemical Co., Ltd. and Shanghai Furui Chemical Co., Ltd. (FR-5300 and FR-6800).

### Example 1

(1) Preparation of the bionic wet surface adhesion promoter: 40 g of polyvinylpyrrolidone and 40 g of 2-chloro-3',4'-dihydroxyacetophenon were added into a Parr bench reactor with a capacity of 1 L, and 150 mL of ethanol was added to obtain a dark brown mixture. The atmosphere was changed from air to N₂ before heating. The reaction was carried out at 70 °C at a stirring speed of 200 rpm, with an internal pressure of 0.7 atm. After 7 hours, a mixture of the reaction product and residual raw materials was obtained, and the mixture was cooled to room temperature and then purified with 500 mL of n-hexane in a container. In the purification process, the container was placed in an ultrasonic device for 1 hour to remove the residual raw materials. After purification, the product was transferred to a PTFE plate and dried together with the PTFE plate in a vacuum oven (-0.08 MPa) at 50 °C for 1-2 days to obtain a very fragile solid product. The fragile product was transferred to a tank of about 100 ml and ball-milled at 350 rpm for 12 hours to obtain a powder capable of passing through a 230 # mesh sieve.

(2) Preparation of the room temperature curable silicone sealant composition: according to the amount of each component specified in Table 1, one or more polyorganosiloxanes with viscosity of 3000 ~ 100000 mPa•s at room temperature and corresponding plasticizer were added to a planetary mixer, and stirred under negative pressure (-0.08 MPa), and heated to 80 °C. The inorganic filler was added, fully stirred and dispersed under negative pressure (-0.08 MPa), heated to 130 °C and kept warm for one hour, then cooled down to 65 °C, and filled with N₂; the crosslinking agent, the bionic wet surface adhesion promoter, the UV absorber and the light stabilizer were added, and stirred and dispersed for 15 minutes under negative pressure (-0.07 MPa). N₂ was filled, the catalyst was added, stirred at low speed for 10 minutes, and stirred and dispersed at low speed under negative pressure (-0.08 MPa) for 15 minutes. After fully mixing uniformly, N₂ was filled, and extrusion and packaging were performed.

### Example 2

The method of Example 1 was repeated according to the amounts of various components specified in Table 1.

### Example 3

The method of Example 1 was repeated according to the amounts of various components specified in Table 1.

### Comparative Example 1

The method of Example 1 was repeated according to the amounts of various components specified in Table 1, without the addition of the bionic wet surface adhesion promoter.

### Comparative Example 2

The method of Example 1 was repeated according to the amounts of various components specified in Table 1, without the addition of the bionic wet surface adhesion promoter.

### Comparative Example 3

The method of Example 1 was repeated according to the amounts of various components specified in Table 1, except that a pulverizer was used instead of the ball milling and the sieve was not passed during the preparation of the bionic wet surface adhesion promoter.

**Table 1**

| polyorganosiloxane (20000 mPa·s) | 60 | 60 | 60 | 45 | 45 | 60 |
|---|---|---|---|---|---|---|
| | Example 1 | Example 2 | Example 3 | Comparative Example 1 | Comparative Example 2 | Comparative Example 3 |
| bionic wet surface adhesion promoter | 1 | 0.4 | 0.2 | \ | \ | 1 |
| polyorganosiloxane (80000 mPa·s) | 10 | 5 | \ | \ | \ | 10 |
| polyorganosiloxane (50000 mPa·s) | 5 | 10 | 15 | 30 | 30 | 5 |
| plasticizer | 40 | 40 | 35 | 35 | 35 | 40 |
| methyltrimethoxysilane crosslinking agent | 1.4 | 1.4 | 1.75 | 1.35 | 1.7 | 1.4 |
| methyltriethoxysilane crosslinking agent | 4 | 4 | 3 | 4 | 4 | 4 |
| dimethoxydimethyl silane crosslinking agent | 1.2 | 1.2 | 1.2 | \ | 1.0 | 1.0 |
| vinyltrimethoxysilane crosslinking agent | \ | \ | 0.6 | 1.0 | \ | \ |
| tin catalyst | 0.2 | 0.1 | 0.1 | 0.2 | 0.2 | 0.2 |
| titanium catalyst | 4.8 | 3.8 | 3.8 | 4.8 | 4.8 | 4.8 |
| inorganic filler (CCS 25i) | 85 | 85 | 90 | 90 | 90 | 85 |
| inorganic filler (1250-M) | 0.5 | 0.3 | \ | 0.3 | \ | \ |
| UV absorber & light stabilizer | 1 | 0.6 | \ | \ | 0.6 | 0.6 |

In order to characterize the properties of the obtained silicone sealant compositions, the silicone adhesives prepared in the above examples and comparative examples were respectively tested in accordance with international standards.

Tensile strength and elongation at break were determined with reference to the standard ASTM D412-16 Method A. Shore hardness was determined with reference to the standard ASTM D2240-15 Type A. Tensile adhesion test of a dry surface substrate was carried out according to the standard ASTM C1135-19, wherein the dry surface substrate herein was anodic aluminum oxide substrate. Tensile adhesion test of a wet surface substrate was carried out according to the standard ISO 8339: 2005, wherein the wet surface substrate herein was a cement board with water content greater than 90%, which was obtained by wiping off water on the surface after soaking in normal temperature water for 24 hours, and this substrate itself was easy to absorb water. The wet surface simulated the situation after rain or humid weather, and could be used to test the tensile adhesion strength of silicone sealant composition on the wet surface. Conditions of Xenon lamp accelerated aging test could be referred to the standards ASTM G155-21 and ASTM C1442-14. The test results are shown in Table 2.

**Table 2**

| Properties | Example 1 | Example 2 | Example 3 | Comparative Example 1 | Comparative Example 2 | Comparative Example 3 | Commercial product A | Commercial product B |
|---|---|---|---|---|---|---|---|---|
| Tensile strength / MPa | 2.26 | 2.20 | 2.31 | 2.10 | 2.63 | 2.01 | 2.20 | 3.56 |
| Elongation at break / % | 400 | 570 | 530 | 660 | 570 | 530 | 500 | 300 |
| Shore hardness / A | 27 | 21 | 24 | 19 | 22 | 19 | 28 | 46 |
| Tensile adhesion strength - dry surface / MPa (anodic aluminum oxide substrate) | 1.06 | 1.16 | 1.17 | 0.86 | 0.75 | 0.90 | 1.04 | 1.57 |
| adhesion strength at 50% tensile / MPa | 0.39 | 0.35 | 0.40 | 0.27 | 0.34 | 0.29 | 0.42 | 0.47 |
| Cohesive failure zone / % | 100% | 100% | 100% | 100% | 100% | 100% | 100% | 100% |
| Tensile | 0.98 | 1.12 | 1.19 | 0.75 | 0.70 | 0.97 | 1.02 | 1.39 |
| adhesion strength - after aging / MPa | | | | | | | | |
| adhesion strength at 50% tensile - after aging / MPa | 0.37 | 0.35 | 0.42 | 0.31 | 0.32 | 0.29 | 0.40 | 0.47 |
| Tensile adhesion strength - wet surface / MPa (cement board with water content greater than 90%) | 0.96 | 0.89 | 0.74 | 0.06 | 0.17 | 0.56 | 0.12 | 0.21 |

As can be seen from Examples 1 ~ 3, the embodiments optimize the preparation and purification processes of the bionic wet surface adhesion promoter and control the mass ratio of reactant polyvinylpyrrolidone to 2-chloro-3',4'-dihydroxyacetophenon at about 1: 1, and the purification is performed by using n-hexane after complete reaction. The obtained bionic wet surface adhesion promoter can not only improve the adhesion of the silicone sealant on the wet substrate surface, but also make the silicone sealant have sufficient strength and appropriate modulus to bear loads. Based on the standard ASTM C1135, the compositions have tensile adhesion strength of 1.0 MPa or more on the dry substrate. Based on the standard ISO 8339, the compositions have tensile adhesion strength of 0.7 MPa or more on the wet substrate.

In summary, the one-component room temperature curable silicone sealant composition according to the embodiments has good adhesion performance on both the dry surface and the wet surface, and has good flexibility and durability. In combination with other desired properties such as anti-mould property, the one-component room temperature curable silicone sealant composition may be used in the construction field, especially in humid environments not suitable for room temperature curable silicone structural adhesive products commonly used in the market at present.

It is obvious that the above embodiments according to the disclosure are merely examples for clear illustration of the present disclosure and are not intended to limit the embodiments of the present disclosure. Other variations or alterations in different forms may be made on the basis of the above description for those of ordinary skill in the art. There is no need and cannot be an exhaustive list of all embodiments here. Any modifications, equivalents and improvements made within the spirit and principles of the disclosure shall be included in the protection scope of the claims of the disclosure.

## Claims

1. A method for preparing a bionic wet surface adhesion promoter, comprising:
Reaction: reacting polyvinylpyrrolidone with 2-chloro-3',4'-dihydroxyacetophenon;
Purification: purifying the product obtained in the reaction step;
Drying: drying the product obtained in the purification step; and
Grinding: grinding the product obtained in the drying step into powder;
wherein the mass ratio of polyvinylpyrrolidone to 2-chloro-3',4'-dihydroxyacetophenon is (0.8 ~ 1.2): 1, the purification step uses n-hexane for purification, the drying step adopts a vacuum drying process, and the grinding step adopts a ball milling process.

2. The bionic wet surface adhesion promoter prepared by the method according to claim 1.

3. A room temperature curable silicone sealant composition, comprising:
a) 0.2-5 parts by weight of the bionic wet surface adhesion promoter according to claim 2;
b) 60-120 parts by weight of polyorganosiloxane, having the viscosity of 3000 ~ 100000 mPa•s at room temperature;
c) 20-50 parts by weight of plasticizer, having the viscosity of 50 ~ 1000 mPa•s at room temperature;
d) 2-10 parts by weight of crosslinking agent, comprising more than three types, each containing more than two reactive groups capable of reacting with the polyorganosiloxane;
e) 2-7 parts by weight of catalyst, comprising tin catalyst and titanium catalyst;
f) 60-120 parts by weight of inorganic filler; and
g) 0-10 parts by weight of functional filler;
wherein the composition has tensile adhesion strength of 1.0 MPa or more on a dry substrate measured based on the standard ASTM C1135; and the composition has tensile adhesion strength of 0.70 MPa or more on a wet substrate measured based on the standard ISO 8339.

4. The room temperature curable silicone sealant composition according to claim 3, wherein the polyorganosiloxane comprises two or more polyorganosiloxanes having different viscosities.

5. The room temperature curable silicone sealant composition according to claim 3, wherein
the polyorganosiloxane is an alkoxy-terminated polyorganosiloxane with a molecular formula of H₃CO-[R₂SiO]ₙ-OCH₃, wherein R is selected from hydrogen, methyl, ethyl or phenyl, and n is an integer between 500 and 2000; and/or
the polyorganosiloxane is a hydroxyl-terminated polyorganosiloxane with a molecular formula of HO-[R₂SiO]ₙ-OH, wherein R is selected from hydrogen, methyl, ethyl or phenyl, and n is an integer between 500 and 2000.

6. The room temperature curable silicone sealant composition according to claim 3, wherein the plasticizer is a methyl-terminated polyorganosiloxane.

7. The room temperature curable silicone sealant composition according to claim 3, wherein
two or more of the crosslinking agent are selected from methyltrimethoxysilane, methyltriethoxysilane, dimethoxydimethyl silane, vinyltrimethoxysilane, vinyltriethoxysilane, vinylmethyldimethoxysilane, tetramethyl orthosilicate, or tetraethyl orthosilicate; and/or
one of the crosslinking agent is selected from 3-aminopropyltriethoxysilane, 3-aminopropyltrimethoxysilane, 3-aminopropyl-methyldiethoxysilane, [3-(2-aminoethylamino)propyl]trimethoxysilane, 3-(2-aminoethylamino)propylmethyldimethoxysilane, or γ-glycidoxypropyltrimethoxysilane.

8. The room temperature curable silicone sealant composition according to claim 3, wherein
the tin catalyst is selected from one or more of dibutyltin dilaurate, dibutyltin diacetate, dioctyltin dilaurate, dibutyl dioctyl tin, or dibutyltin oxide; and/or
the titanium catalyst is selected from one or more of isopropyl titanate, tetrabutyl titanate, or titanium chelates.

9. The room temperature curable silicone sealant composition according to claim 3, wherein the inorganic filler is selected from one or more of nano calcium carbonate, precipitated calcium carbonate, ground calcium carbonate, fumed silica, or precipitated silica.

10. The room temperature curable silicone sealant composition according to claim 3, wherein the functional filler is selected from one or more of an anti-mould agent, a UV absorber, a light stabilizer, an antioxidant, and a pigment.

11. The room temperature curable silicone sealant composition according to claim 10, wherein the anti-mould agent is selected from one or more of azoles, triazoles, isothiazolones, and organozinc salts.

12. A method for preparing the room temperature curable silicone sealant composition according to any one of claims 3 to 11, comprising:
S1. mixing the polyorganosiloxane with the plasticizer;
S2. adding the inorganic filler, and fully mixing and dispersing under 90-140 °C and vacuum;
S3. adding the crosslinking agent and the functional filler under 40-80 °C and vacuum; and
S4. adding the catalyst under a nitrogen atmosphere.
